# EUROPEAN PATENT APPLICATION

(11) **EP 4 518 052 A1**
(43) Date of publication of application: **05.03.2025**
(21) Application number: 23194936.3
(22) Date of filing: 01.09.2023
(51) Int. Cl.: H02B 1/21

(54) **MOUNTING PORTION AND ADAPTER FOR AN ELECTRICAL INSTALLATION DEVICE, AND ELECTRICAL INSTALLATION DEVICE**

(71) Applicant: Wöhner Besitz GmbH, 96472 Rödental (DE)
(72) Inventor: MÜTZEL, David, 96450 Coburg (DE); MASEL, Joram, 96328 Küps (DE)
(74) Representative: 2s-ip Schramm Schneider Bertagnoll Patent- und Rechtsanwälte Part mbB

(57) **Abstract**

Mounting portion for an electrical installation device, the mounting portion being attachable to at least one current busbar, the mounting portion comprising: at least one bracket that is arranged on the mounting portion, each bracket being adapted for being bracketed onto one other busbar, and being adapted to grasp behind the one busbar, each bracket being supported rotatably with respect to the mounting portion around an axis of rotation, a spring means for effecting a clamping force, the clamping force acting on the bracket in a direction parallel to the axis of rotation of the bracket when bracketed onto the busbar.

## Description

The present invention relates to a mounting portion and an adapter for an electrical installation device, as well as to an electrical installation device having such a mounting portion or adapter.

Such a mounting portion or adapter are used in electrical installations for attaching electrical installation devices to one or more busbars of a current busbar system. Hereto, mounting portions and adapters are known which are equipped with brackets, clamps or the like by means of which the mounting portions or adapters are fastened on the busbars. In such a way, they couple the installation device mechanically and electrically with the busbar system.

In general, installation devices such as fuse holders, fuse switch disconnectors, switch disconnectors with fuses, switches, adapters, converters, or the like are attached on to the busbars in a predefined orientation. Such devices may have mounting brackets unmovably arranged on a surface of their casing or on their adapter.

However there are installation devices which may have more than one orientation in which they can be mounted, e.g., in order to change the output direction of a current conductor. If such an installation device should be mounted in another orientation, e.g., "upside down", the mounting brackets have to be removed from the backside of the mounting portion, and secured again in another orientation, e.g., "upside down". This may be cumbersome or prone to error since the brackets or their fixing screws may get lost when they are removed. As an alternative, the installation device includes a separate adapter which is designed to be secured to the busbars and to receive the installation device in two orientations (upside and upside down). This, however, may be disadvantageous too.

Therefore, there is a need to provide a mounting device, adapter, and installation device which allow for easier fixing them to a bus bar system in various orientations.

This object is solved by the mounting device with the features of claim 1. Advantageous embodiments thereof are defined in the dependent claims.

Thus, provided is a mounting portion for an electrical installation device, the mounting portion being attachable to at least one current busbar,
the mounting portion comprising:
at least one bracket that is arranged on the mounting portion, each bracket being adapted for being bracketed onto one other busbar, and being adapted to grasp behind the one busbar,
each bracket being supported rotatably with respect to the mounting portion around an axis of rotation,
a spring means for effecting a clamping force, the clamping force acting on the bracket in a direction parallel to the axis of rotation of the bracket when bracketed onto the busbar.

The axis of rotation may be formed as a rod which is arranged in the mounting portion.

The at least one bracket may be adapted such that it can be rotated from a first angular orientation to a second angular orientation, the second angular orientation being opposite the first angular orientation.

The at least one bracket may be adapted such that it can be rotated alternatively into a fasten orientation and into a shift orientation, the fasten orientation allowing the at least one bracket to be bracketed onto the busbar, and the shift orientation allowing the at least one bracket to be shifted in along the axis of rotation, and wherein the at least one bracket, in the fasten orientation, is locked with respect to shifting along the axis of rotation.

The at least one bracket may be adapted such that it can be locked in at least two predetermined axial positions.

Each bracket may have two parallel claws adapted to grasp behind the bus-bar.

The spring means may be located on a busbar-oriented surface of the mounting portion when attached to the least one busbar.

The spring means may be a contact spring which is electrically connectable with the at least one busbar, and acts as an electrical connecting means to the at least one busbar.

The spring means may be arranged in the mounting portion.

The spring means may comprise at least one of a disk spring, leaf spring, and spiral spring.

The spring means may comprise at least one of a disk spring, and spiral spring, each spring being associated with another one of the at least one bracket and being concentrically with and around the axis of support of the respective bracket.

The mounting portion may further comprise contact means which are electrically connectable with the at least one busbar.

The contact means may be the spring means.

Or, the contact means may comprise at least one contact block.

The mounting portion may have a current conductor which is electrically connectable with the contact means, and for discharging current in a predetermined direction, in particular in direction of the first or of the second orientation.

The mounting portion may further comprise at least one projection on the busbar-oriented surface, which when the mounting portion is attached to the busbar, can be pressed against the at least one busbar.

The mounting portion may further comprise a plurality of brackets, a plurality of spring means, and a plurality of current conductors, each bracket being suitable for being fastened to another busbar of a busbar system, each spring means being electrically connectable to another current conductor.

The mounting portion may further comprise a securing mechanism,
the securing mechanism having a latching arm and a pressing spring, the latching arm being articulated on the rear side of the mounting portion and having a sawtooth profile,
the latching arm being adapted to grasp over an edge of the busbar, and to be permanently pressed by the pressing spring against the bus-bar, when he mounting portion is attached to the busbars.

The invention further provides an adapter comprising the mounting device as described above, and being designed to receive the electrical installation de-vice on the mounting device, and to electrically connect the electrical installation device with a busbar system.

Yet further, the invention provides an electrical installation device with a mounting portion as described above.

Herein, the electrical installation device may be one of the following: Engine control unit, power supply unit, adapter for electrical devices, measuring device, display device, converter unit, fuse holder, switch disconnector, switch disconnector with fuses, fuse switch disconnector, overvoltage protection device, lightning protection device, communication device, residual current circuit breaker, interference suppression device, controller.

The invention and embodiments thereof are further described in connection with the drawing, wherein
- Fig. 1: illustrates the mounting portion of the invention along with an electrical installation in different views and different orientations;
- Fig. 2: illustrates an exploded partial view of the mounting portion of the invention;
- Fig. 3: shows a diagonal view onto the rear and lateral sides of the mounting portion;
- Fig. 4: shows a detail of a first embodiment of the invention;
- Fig. 5: shows a detail of a second embodiment of the invention;
- Fig. 5A: illustrates a variant of the second embodiment;
- Fig. 6: illustrates a third embodiment of the invention;
- Figs. 7, 8: illustrate shifting of the brackets, and the different angular orientations of the brackets; and
- Fig. 9: illustrates the adaptation of the brackets to different busbar thicknesses.

Herein, "up", "down", "horizontal, "vertical", "in front", "behind", "above", "below", or the like relate to orientations or positions of a part as perceived by a human standing in front of the part, in particular the mounting portion, when it is mounted or placed as intended.

It is assumed that busbars run in the horizontal direction and parallel to each other, and are mounted, or are intended to be mounted, at a vertical wall or surface of a switch cabinet. This horizontal direction is denoted as the y-direction. Several busbars, making up a busbar system, run in parallel to each other.

The mounting portion, busbar adapter or installation device may cover all the busbars of the busbar system, and connect to them. It may extend in the vertical direction, which is denoted as the x-direction, or the longitudinal direction of the busbar adapter or part thereof.

The front or frontside of the mounting portion, busbar adapter, of the installation device, of the busbars, the busbar system or of any part thereof is the side which is oriented to a human standing in front of the busbar adapter, the busbar system or the part if they are mounted as intended.

The rear side is a side of a part which is oriented or faced to the background or away from a human standing in front of that part or portion.

Throughout this document, an electrical installation device is understood to be a device which is intended to be mounted on and connected with the bus-bar system. They may be designed for being directly attached to the busbars with their backside, which is denoted here as the mounting portion. Busbar adapters are devices which are designed for being attached to the busbars, again via their mounting portion on the backside, and to receive, on their frontside, electrical installation devices which do not directly fit with the busbar system.

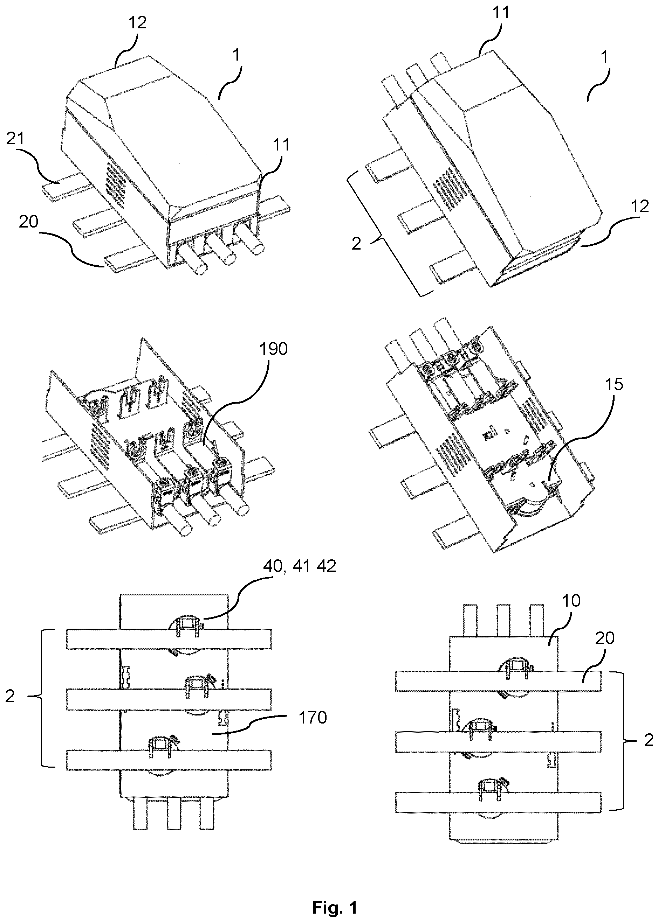

Fig. 1 illustrates the mounting portion 10 of the invention as part of an installation device 1, which is in this example a fuse switch disconnector, in different views and attached two different orientations on the busbar system 2 including three busbars 20. The right column shows the mounting portion 10 with the installation device 1 fixed to the busbars 20 such that the three phases from the busbars are lead to upper side of the mounting portion (top output direction), while the left column shows the mounting portion attached upside down, such that the current phases are lead the lower side of the mounting portion (bottom output direction).

The mounting portion 10 may also be part of an adapter which is designed to receive an electrical installation device, and is attachable to at least one current busbar 20.

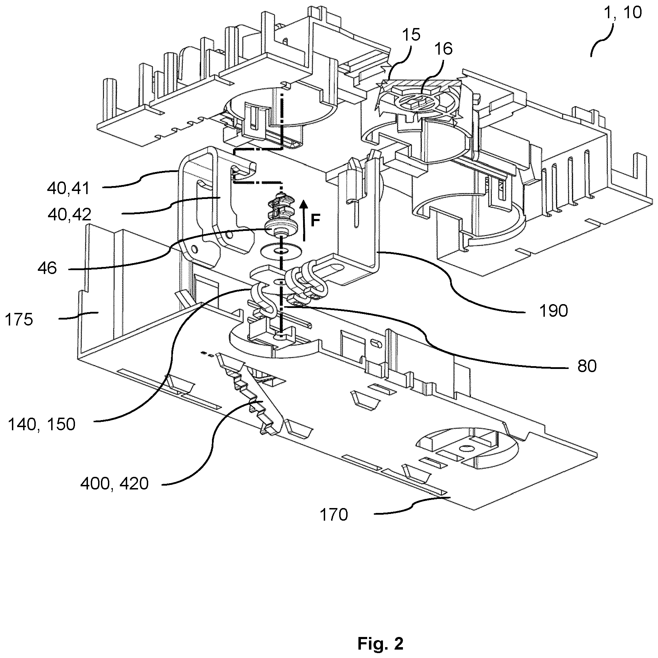

Fig. 2 illustrates an exploded partial view of the mounting portion 10. The mounting portion 10, in the broadest aspect of the invention, comprises at least one bracket 40 that is arranged on the mounting portion 10 and is suitable for being fastened to the at least one busbar 20, wherein the at least one bracket 40 is supported rotatably with respect to the mounting portion 10 around an axis of rotation. The axis 80 of rotation is perpendicular to the rear surface 170 of the mounting portion 10 (and to the surface of the busbar 20 when the mounting base 10 is attached to it).

In order to provide a secure fixation of the mounting portion 10 on the at least one busbar 20, the mounting portion 10 further comprises spring means 140. The spring means 140 effects a clamping force F on the bracket 40 in a direction parallel to the axis 80 of rotation of the at least one bracket 40 when attached to the busbar 20.

The mounting portion 10 is to be attached with its rear side 170 to the at least one busbar 20. For providing a defined clearance between the rear surface 170 of the mounting portion 10 and the at least one busbar 20, the mounting portion 10 comprises legs 30 which protrude from the rear surface 170 and stem against the at least one busbar 20 when the mounting portion 10 is fixed on the at least one busbar 20. The defined clearance also provides for a defined clamping force F even in case pressure is applied onto the mounting portion 10 against the busbars 20.

If the mounting portion 10 is part of an adapter, it may comprise, on its front side, a profile rail, such as a top hat rail, DIN rail, or the like, for supporting an electrical installation device, as already described above (not illustrated in the Figures).

The mounting portion 10 may comprise a casing in which current conductors 190 for at least one phase of the at least one busbar 20 are arranged. The current conductors 190 are oriented in a longitudinal direction of the mounting portion 10, that is in the vertical direction, when mounted on the busbars 20 which run in the horizontal direction. The conductors 190 connect to the busbars 20 on the one side and are terminated, e.g., with contact pads which may form parts of fuse holders.

Via the fuses received in the fuse holders the currents may be conducted to an upper 11 or on a lower 12 surface of the mounting portion 10, as described above.

The brackets 40 may be arranged within a shell 15 which in turn is received in the mounting portion 10.

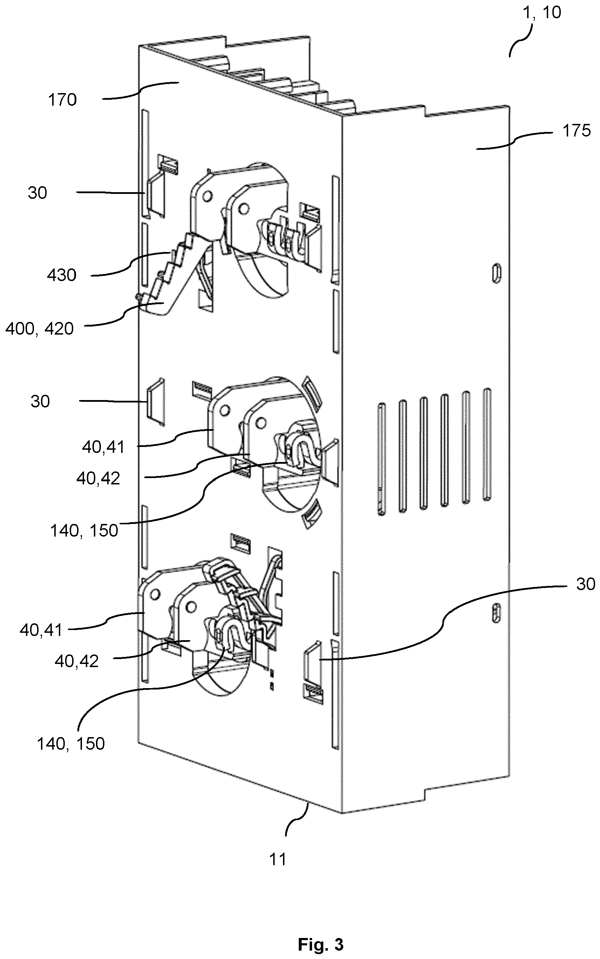

Fig. 3 shows a diagonal view onto the rear side 170 and onto a lateral side 175 of the mounting portion 10 according to an embodiment of the invention. The rear side 170 is the one side which faces to the busbars 20. The mounting portion 10 of this embodiment has three brackets 40 and is suitable for being attached to the three current busbars 20 of a three-phase system. Each bracket 40 comprises two claws 41, 42 which are parallel to each other. More specifically, each bracket 40 is clamped with its two claws 41, 42 onto one other of the busbars, whereby a part of each claw 41, 42 gets behind the respective busbar 20.

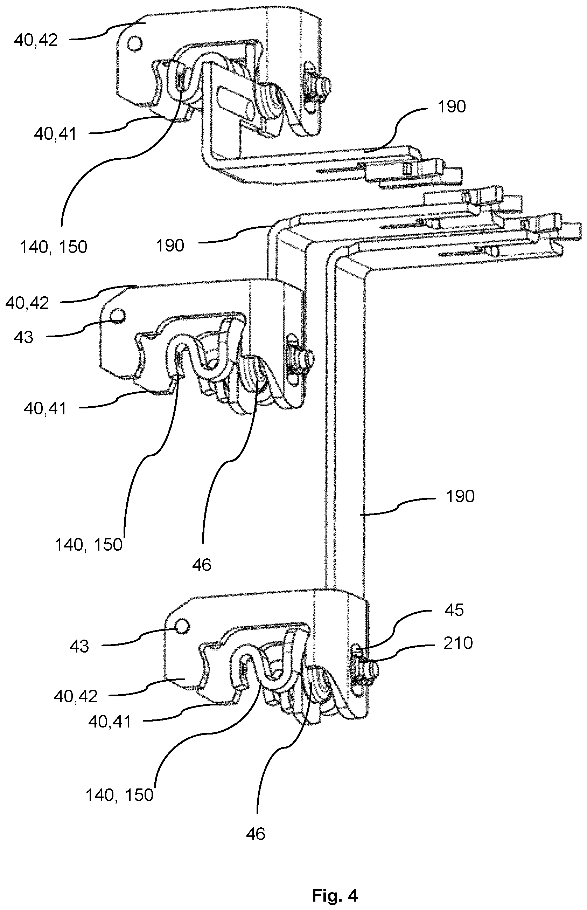

Fig. 4 illustrates a detail of the first embodiment of the invention, that is the spring means 140, the brackets 40, and the conductors 190 which form the electrical connection to the busbars 20. The spring means 140 are made up of three springs 150, each spring 150 being associated with another one of the brackets 40. The springs 150 are arranged on the rear surface 170 of the mounting portion 10 such that they push against the busbars 20 when the mounting portion 10 is clamped onto the busbars 20. Thereby, a force is applied onto each bracket 40, which leads to a secure fixation of the mounting portion 10 on busbar 20. The busbar 20 is between the spring 150 and the part of the bracket 40 which gets behind the busbar 20.

In this embodiment, the springs 140 are the electrical connectors to the busbars 20, and they are formed as contact springs 150. Via the contact springs 150, and conductors 190 connected to the springs, the currents of the phases are conducted to the electrical installation device 1 attached to the mounting portion 10. Such contact springs 150 are typically made from copper and may be partly rolled.

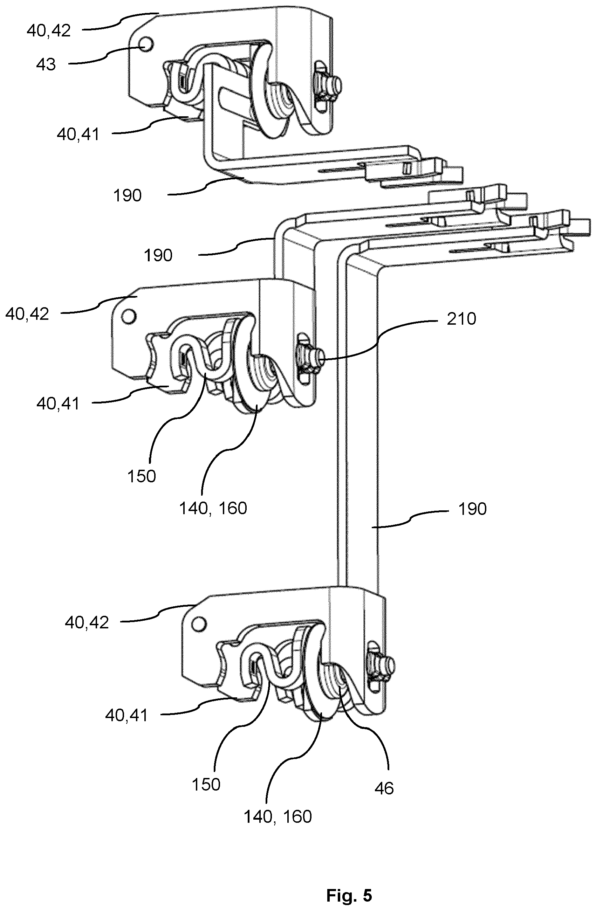

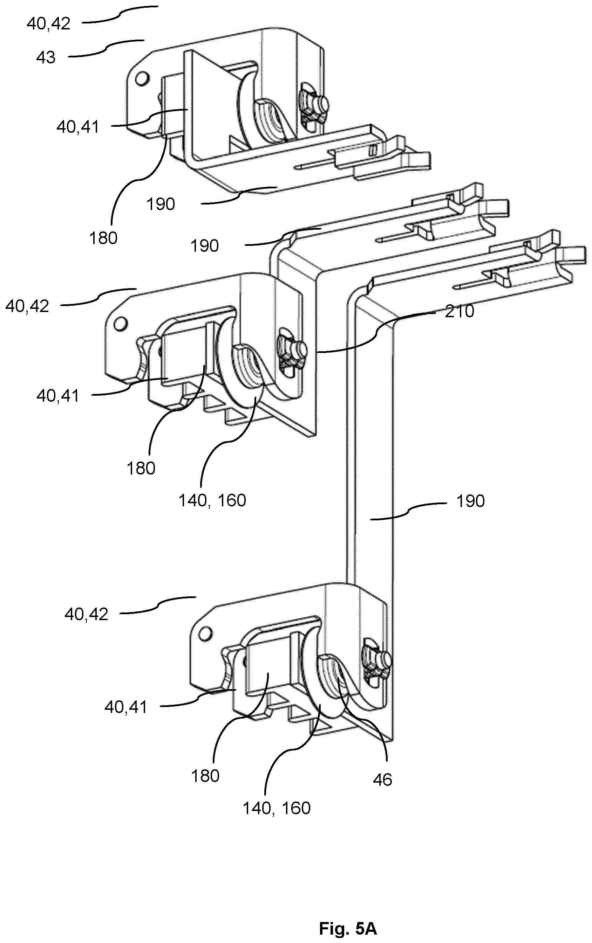

Fig. 5 illustrates a detail of the second embodiment of the invention, that is again the spring means 140, the brackets 40, and the conductors 190 which form the electrical connection to the busbars 20. In this embodiment, the spring means 140 for securing the brackets 40 are implemented by disk springs 160, separately from the contact springs 150. Herein, each bracket 40 has a disk spring 160 which pushes the bracket 40 against the busbar 20 when it is clamped on the busbar 20. The disk spring 160 is arranged in the mounting portion 10 concentrically around the axis 80 which supports the bracket 40. This embodiment may be advantageous if the contact springs 150 cannot, or not alone, provide the force for pressing the brackets 40 against the busbars 20.

Fig. 5A illustrates a variant of the second embodiment described above. According to this variant, the electrical contact to the busbars 20 is provided by massive contact blocks 180 arranged at the conductors 190, instead of the contact springs 150. That is the contact springs are not present here. The other parts are the same those described above.

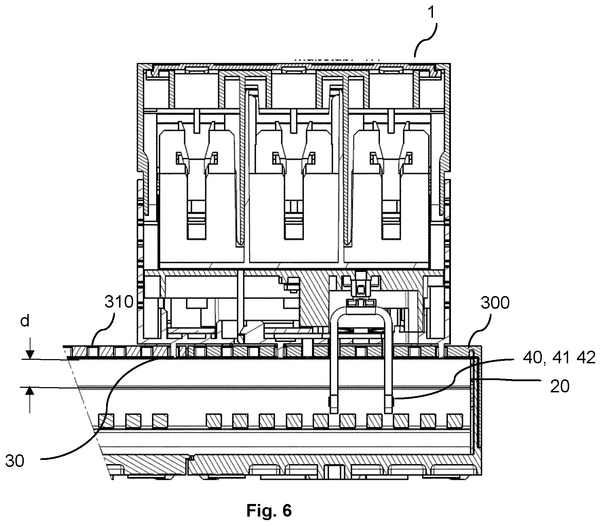

Fig. 6 illustrates a third embodiment of the invention. This embodiment is adapted for being used with a touch protection cover 300 arranged on the busbars 20. More specifically, the mounting portion 10 is arranged to be fixed through the slits 310 of the touch protection cover 300. Hereto, the claws 41, 42 of the brackets are embodied as flat knifes adapted to pass through the slits 310 of the touch protection cover 300. The mounting portion 10 is not pressed against the touch protection cover 300 but forms a clearance between its rear surface and the touch protection cover 300. Hereto, the mounting portion 10 comprises legs 30 arranged on its rear surface 170, which also pass through the slits 310 of the touch protection cover 300 and are pressed against the busbars 20 by the spring means 140 when the mounting portion 10 is fixed to the busbars 20. The legs are long enough to provide for the clearance between touch protection cover 300 and surface of the mounting portion 10.

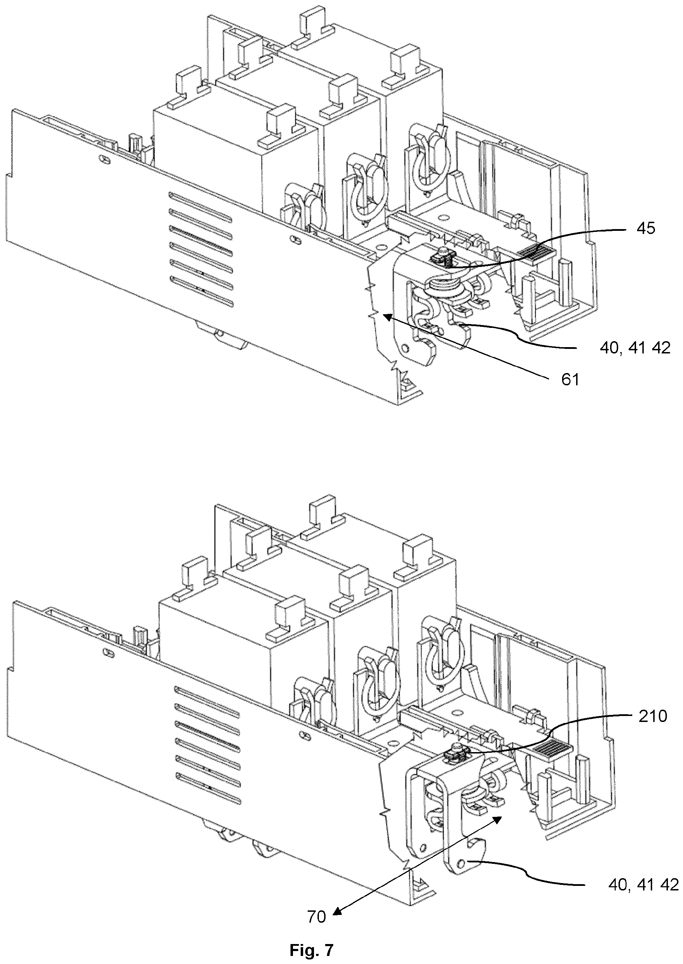

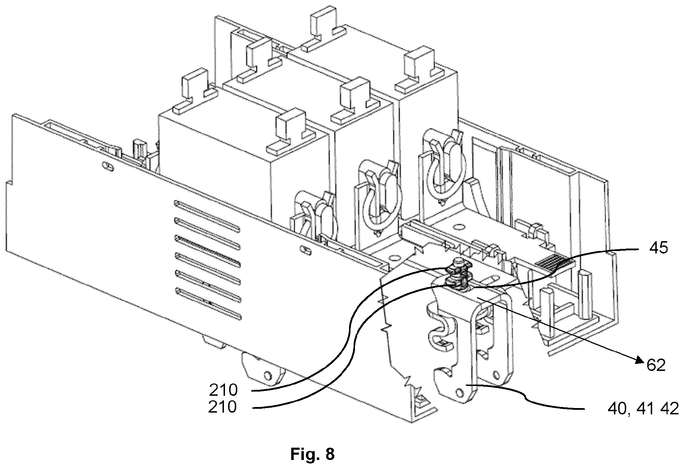

Figs. 7, 8 illustrate shifting of the brackets 40, and the different angular orientations of the brackets. As mentioned above, the brackets 40 are supported rotatably with respect to the mounting portion 10. In more detail, the brackets 40 can be rotated such that their orientation may be reversed by 180 degrees i.e., turned from a first fasten orientation 61 to a second fasten orientation 62. The first and second fasten orientations are along the longitudinal direction of the mounting portion 10. In this way, the mounting portion 10 can be attached upside down to the busbar system if needed, as shown and described in connection with in Fig. 1.

For allowing to be rotated, each bracket 40 is supported rotatably around the axis 80 on the mounting portion 10. The axis 80 may be a physical axis 80, e.g., a rod. The rod is arranged in the mounting portion 10. The orientation of the axis 80 or rod is perpendicular to the rear side 170 of the mounting portion 10, as well as to the busbar's front surface 21 when attached to the busbar 20.

Since the brackets 40 are rotatably supported on the mounting portion 10 they can be rotated without the need to separate the brackets 40 from the mounting portion 10.

Furthermore, the mounting portion 10 of the invention can be attached to busbars 20 of different thicknesses. Hereto, each bracket 40 can be shifted along the axis 80, such that bracket 40 will protrude somewhat more, or less from the rear side of the mounting portion 10, depending on the respective width of the busbars 20.

Shifting the bracket 40 is only enabled when the bracket 40 is in a predefined angular orientation 70 with respect to the mounting portion 10. This angular orientation 70 is 90 degrees with respect to the first or second fasten orientation 61 or 62 of the mounting portion 10. The orientation 70 is an orientation in which the bracket 40 is not intended to be clamped on the busbar 20, denoted here also as the neutral or shift orientation 70.

The orientation 70 in which the bracket 40 can be shifted along the axis 80 is defined by an elongate opening 45 in the bracket 40. Concentrically with the axis 80 arranged is a spacer 46 which has at least one non-circular thickening, or an nose 210, whose shape corresponds to the opening 45. The thickening or nose 210 extends orthogonally to the axis 80. The opening 45 allows the bracket 40 to be shifted along the axis 80 only when the opening 45 is in the same orientation as the thickening or nose 210 of the spacer 46. Then, the opening 45 and the thickening or nose 210 match to each other so that the thickening or nose 210 can pass through the opening 45. In all other relative orientations of opening 45 and thickening or nose 210, the bracket 40 is retained in the longitudinal direction of the axis 80 defined by the position of the thickening or nose 210 on the spacer 46, and is supported by it.

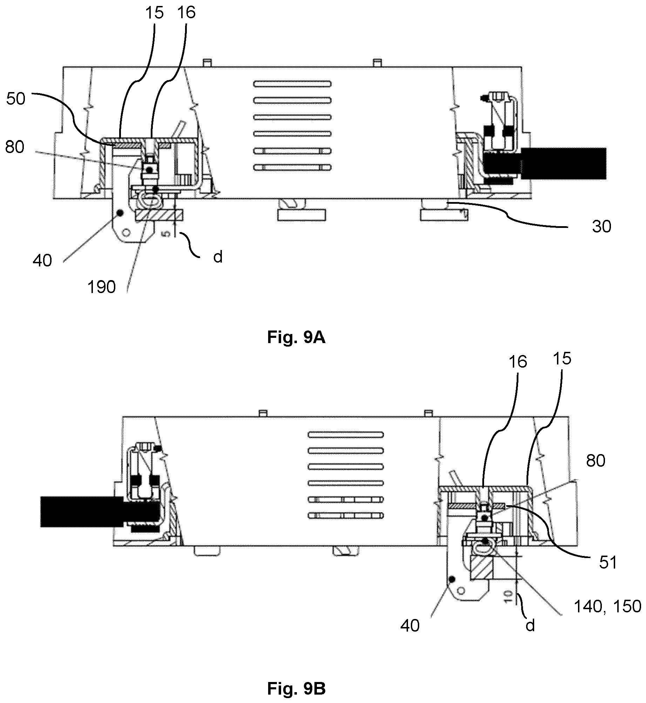

By providing several thickenings or noses 210 of the shape as defined above along the spacer 46, several axial positions 50, 51 of the bracket 40 can be defined. In this way, the mounting portion 10 can be adapted to different busbar thicknesses, e.g., 5mm and 10mm. Figs. 9A, B illustrate the respective axial positions 50, 51 of the bracket 40 adapted to a 5mm busbar (Fig. 9A), and 10mm busbar (Fig. 9B).

Noses 210 may be arranged on the axis 80, protruding in apertures of intermediate planes through which the axis 80 passes. Then, by providing several planes with such apertures on several levels, several axial positions of the brackets 40 can be defined. Hereby, the uppermost thickening or nose 210 faced to an intermediate plane has the function to block the rotation of the spacer 46 around the axis 80, by being received in a retainer 16 in a plane of the shell 15. Longitudinally shifting the spacer 46 along the axis 80 remains enabled.

As it is clear from the above description, the mounting portion 10 can be attached to the busbars 20 without needing any tool. Moreover, the adaptation to different thicknesses of the busbars 20 as well as putting the brackets 40 in the first fasten orientation 61 or in the second fasten orientation 62 can also be done without using any tool. Further, the brackets 40 are not separated from the mounting portion whenever they are operated. There is no risk that they get lost when the mounting portion is fixed to the busbars or separated from the busbars. Both operations are enabled by the support mechanism of the brackets.

Further, the mounting portion 10 of the invention may have a securing mechanism 400 for preventing the mounting portion 10 from being detached from the busbars without the use of a tool. This securing mechanism 400 provides for protection against accidentally detaching the mounting portion 10 from the busbars 20. The securing mechanism 400 comprises a spring (not illustrated), and a latching arm 420 which latter is articulated on the rear side 170 of the mounting portion 10, and has a sawtooth profile 430. With this profile and in cooperation with the spring 410 acting on the latching arm 420, the latching arm 420 grasps one of the busbars 20, is permanently pressed by the spring over an edge of the busbar 20 and thus secures the mounting portion 10 against being detached from the busbars 20.

The latch/spring mechanism can be released by use of tool which is introduced in an opening of the mounting portion 10. This tool may be a screwdriver or the like.

Yet further, each of the clamps 41, 42 may be provided with a small protrusion 43 on the surface. This protrusion 43 defines a path for leakage currents via a touch protection cover (if provided) to the adjacent phase.

### List of reference numerals

- 1: electrical installation device
- 2: busbar system
- 10: mounting portion
- 11: upper surface
- 12: lower surface
- 15: shell
- 16: retainer
- 20: busbar
- 21: front surface of busbar
- 30: projection
- 40: bracket
- 41, 42: claw
- 43: protrusion
- 45: opening
- 46: spacer
- 61: first fasten orientation
- 62: second fasten orientation
- 70: shift (neutral) orientation
- 80: axis, rod
- 140: spring means
- 150: contact spring
- 160: disk spring
- 170: rear side, rear surface
- 175: lateral side
- 180: contact block
- 190: current conductor
- 210: thickening, nose
- 300: touch protection cover
- 310: slit
- 400: retaining mechanism
- 420: latching arm
- 430: sawtooth profile
- d: thickness of busbar
- F: clamping force

## Claims

1. Mounting portion for an electrical installation device, the mounting portion being attachable to at least one current busbar,
the mounting portion comprising:
at least one bracket (40) that is arranged on the mounting portion (10), each bracket being adapted for being bracketed onto one other busbar (20), and being adapted to grasp behind the one busbar (20),
each bracket (40) being supported rotatably with respect to the mounting portion around an axis (80) of rotation,
a spring means (140) for effecting a clamping force (F), the clamping force (F) acting on the bracket (40) in a direction parallel to the axis (80) of rotation of the bracket (40) when bracketed onto the busbar (20).

2. The mounting portion according to claim 1, wherein the axis (80) of rotation is formed as a rod which is arranged in the mounting portion (10).

3. The mounting portion according to one of the preceding claims, wherein the at least one bracket (40) can be rotated from a first angular orientation to a second angular orientation, the second angular orientation being opposite the first angular orientation.

4. The mounting portion according to one of the preceding claims, wherein the at least one bracket (40) can be rotated alternatively into at least one fasten orientation (61, 62) and into a shift orientation (70), the at least one fasten orientation (61, 62) allowing the at least one bracket to be bracketed onto the busbar, and the shift orientation (70) allowing the at least one bracket (40) to be shifted in along the axis of rotation, and wherein the at least one bracket (40), in the at least one fasten orientation (61, 62), is locked with respect to shifting along the axis (80) of rotation.

5. The mounting portion according to the preceding claim, wherein the at least one bracket (40) can be locked in at least two predetermined axial positions (50, 51).

6. The mounting portion according to one of the preceding claims, wherein each bracket (40) has two parallel claws (41, 42) adapted to grasp behind the busbar (20).

7. The mounting portion according to one of the preceding claims, wherein the spring means (140) is located on a busbar-oriented surface of the mounting portion when attached to the least one busbar (20).

8. The mounting portion according to one of the preceding claims, wherein the spring means (140) is arranged in the mounting portion.

9. The mounting portion according to one of the preceding claims, wherein the spring means (140) comprises at least one of a disk spring (160), leaf spring, and spiral spring.

10. The mounting portion according to one of the preceding claims, wherein the spring means (140) comprises at least one of a disk spring (160), and spiral spring, each spring being associated with another one of the at least one bracket (40) and being concentrically with and around the axis (80) of support of the respective bracket (40).

11. The mounting portion according to one of the preceding claims, further comprising contact means (150, 180) which are electrically connectable with the at least one busbar (20).

12. The mounting portion according to claim 11, wherein the contact means (150) are the spring means (140).

13. The mounting portion according to claim 11, wherein the contact means (180) comprise at least one contact block (180).

14. The mounting portion according to one of claims 11 to 13, further comprising at least one current conductor (190) which is electrically connectable with the contact means (150, 180), for discharging current in a predetermined direction, in particular in direction of the first or of the second orientation.

15. The mounting portion according to one of the preceding claims, comprising a plurality of brackets (40), a plurality of spring means (140), a plurality of contact means (150, 180), and a plurality of current conductors (190), each bracket (40) being suitable for being fastened to another busbar (20) of a busbar system, each contact means (150, 180) being electrically connectable to another current conductor (190).

16. The mounting portion according to one of the preceding claims, further comprising a securing mechanism (400),
the securing mechanism (400) having a latching arm (420) and a pressing spring, the latching arm (420) being articulated on the rear side (170) of the mounting portion (10) and having a sawtooth profile (430),
the latching arm (420) being adapted to grasp over an edge of the busbar (20), and to be permanently pressed by the pressing spring against the bus-bar (20), when the mounting portion is attached to the busbars.

17. An adapter comprising the mounting portion according to one of the preceding claims, and being designed to receive the electrical installation de-vice on the mounting device, and to electrically connect the electrical installation device with a busbar system.

18. An electrical installation device comprising a mounting portion according to one of claims 1 to 16, the electrical installation device being in particular one of the following: Engine control unit, power supply unit, adapter for electrical devices, measuring device, display device, converter unit, fuse holder, switch disconnector, switch disconnector with fuses, fuse switch disconnector, overvoltage protection device, lightning protection device, communication device, residual current circuit breaker, interference suppression device, controller.
